# EUROPEAN PATENT SPECIFICATION

(11) **EP 3 744 511 B1**
(45) Date of publication and mention of the grant of the patent: **09.04.2025**
(21) Application number: 19382433.1
(22) Date of filing: 29.05.2019
(51) Int. Cl.: B29C 70/50, B29D 99/00, B29C 53/04, B29C 70/54, B29L 31/00

(54) **COMPOSITE FORMING STATION**
VERBUNDFORMSTATION
STATION DE FORMATION COMPOSITE

(43) Date of publication of application: 02.12.2020
(73) Proprietor: Airbus Operations, S.L.U., 28906 Getafe (Madrid) (ES)
(72) Inventor: CHAMORRO ALONSO, Francisco Javier, E-28906 Getafe, Madrid (ES); NOGUEROLES VIÑES, Pedro, E-28906 Getafe, Madrid (ES); GARCÍA GARCÍA, Aquilino, E-28906 Getafe, Madrid (ES); GALIANA BLANCO, Jorge Juan, E-28906 Getafe, Madrid (ES); PÉREZ PASTOR, Augusto, E-28906 Getafe, Madrid (ES); MARTÍN ISABEL, Julián, E-28906 Getafe, Madrid (ES)
(74) Representative: ABG Intellectual Property Law, S.L.

(56) References cited:
- EP-A1- 2 522 495
- US-A1- 2009 320 995
- US-A1- 2010 178 454
- US-A1- 2015 203 186

## Description

### TECHNICAL FIELD OF THE INVENTION

The present invention belongs to the field of manufacturing composite parts, and particularly, the invention provides a composite forming station for forming a T-profile composite part from a planar laminate thereof.

Accordingly, an object of the present invention is to provide a composite forming station integrating all necessary means to obtain in a single step a T-profile composite part, such as a stringer, from a laminate thereof.

In advantageous embodiments, the composite forming station further comprises necessary means to act as a curing tool, thus avoiding the need to roll the formed-up composite parts over different manufacturing stations.

### BACKGROUND OF THE INVENTION

T-profile composite parts are normally used as stiffeners for adding rigidity and strength to adjacent load carrying panels or skin. An example of T-profile composite parts are stringers which prevent the skin of an aircraft from buckling or bending under compression or shear loads. In addition, T-profile composite parts may transfer aerodynamic loads acting on the skin onto other supporting structure such as frames, beams, or ribs.

T-profile composite parts are conventionally formed by two identical halves in 'L-shape', which afterwards are joined together. Each halve is the mirror image of the other and are positioned in such a way that both rest on each other making their respective webs contact symmetrically.

The resulting T-profile composite part is theoretically divided in a web (formed by respective webs of the 'L-shape' halves) and the two foot, wherein each feet points in an opposite direction. Once installed, the foot contact the skin or panel leaving the web projecting perpendicularly.

Typically, to manufacture a T-profile composite part, each 'L-shape' halve is manufactured separately. The main steps are as follows:
Firstly, a number of composite plies (i.e. pre-preg) are laid-up one upon the other in a flat manner, thus resulting in a stack of plies. The surface of each stack of plies approximates to the developable surface of the 'L-shape' halve.

If necessary, these flat stacks of plies may be trimmed to the desire shape. The resulting planar laminate (trimmed or not) is known as a composite pre-form.

Secondly, each one of these planar laminates corresponding to a single 'L-shape' halve is bended by its folding line between the web and the foot in order to formup an 'L-profile'. Typical forming-up technologies for this process are hot forming and press-forming; wherein hot-forming uses a membrane and heat, whilst the press-forming uses a press and force.

Finally, in short, both 'L-profiles' are positioned and put together making their respective webs contact symmetrically for achieving the desired 'T-profile'.

It is to be noted that this forming process of a 'T-profile' is nowadays performed in dedicated stations equipped with specific tools and machinery. Therefore, once the forming step is completed, the 'L-profiles' are transported and positioned on the curing tools before going into an autoclave or oven, for instance.

In addition, in some cases, a second forming operation is needed to finally adapt the 'T-profile' composite part obtained by joining both halves to the final shape of the curing tools.

In order to cure the uncured laminates, the formed 'T-profile' is subjected to a final co-curing cycle. Alternatively, both 'L-profiles' may be cured separately, and afterwards bonded together.

According to the production rate, any of the intermediate products: laminates, 'L-profiles', or even 'T-profiles' may be stored in conditioned areas to mitigate their degradation.

In the overall manufacturing process, attention need to be drawn to the preforming step in manufacturing the T-profile composite parts. In particular, the bending step within the forming operations causes internal movements between the composite plies when transitions from planar laminate to 'L-profile'.

A typical folding movement bends the web relative to the foot up to being both perpendicular to each other (i.e. 'L-shape'). This provokes a progressive sliding of the plies creating compression on the internal plies and tension on the external ones. As a result, on the outer edge (free end) of the web it may be seen '*the book effect'.* As the geometry of the desired preform becomes more complex (i.e. torsion, high curved radio), care need to be increase in the working principle of the bending operation.

Therefore, a forming operation may further entail a risk of creating wrinkles or undulations which, in principle, are sited on the web of the 'L-profile'. Particularly, this undesirable wrinkling effect takes places on the zones where the composite plies tend to be compressed preventing loads from being effectively transferred therethorough. Consequently, the final composite material stress drops down significantly.

Thus, 'T-profile' forming operation is a mass-production, critical, labor-intensive, multi-step process that requires high precision as a degree of refinement with which the steps are performed, with a great attention to details.

In manufacturing lines, the composites roll over different stages carrying operations, which constitute a time-demanding process impacting on the production rate of aircrafts. The combination of a number of steps and the high precision required may cause delays prompting a drawback for the aeronautical industry.

Document US20100178454A1 discloses an equipment for obtaining profile sections made from composite material by a shaping station configured to continuously shape a basic profile section that is initially planar on a rigid longitudinally non-straight guiding element to obtain a final longitudinally non-straight profile section made from composite material according to the shape of the guiding element.

Document 2009/0320995A1 describes a device and method for the manufacturing of elements in composite material.

### SUMMARY OF THE INVENTION

The present invention provides a solution for the aforementioned problems by a composite forming station for forming a T-profile composite part from a planar laminate thereof according to claim 1, a method for forming a T-profile composite part according to claim 10, and a T-profile composite part according to claim 15. In dependent claims, preferred embodiments of the invention are defined.

In a first inventive aspect, the invention provides a composite forming station for forming a T-profile composite part from a planar laminate thereof along a forming direction, the composite forming station comprising the features of claim 1.

Unlike the conventional solutions where the two L-shaped halves were formed separately and then joined together prior to curing, the present invention utilizes a single planar laminate already comprising the two halves in their developable surfaces, that is, prior to bending.

The planar laminate used throughout the present invention is composed by a set of stacked plies, comprising a folding line dividing the planar laminate into:
o a web portion for being part of the web of the T-profile composite part, and
∘ a foot portion comprising respective stacked foot of the T-profile composite part; wherein such foot are delimited by the folding line and a free end;
in such a way that the respective stacked foot are separated by two release films.

In use, such planar laminate is arranged on the guiding means of the composite forming station which provides a supporting element allowing the planar laminate to advance in a forming direction defined by the forming station. More preferably, the web portion of the planar laminate is arranged between the guiding means of the composite forming station so that the foot portion is left free.

As the planar laminate advances in such forming direction, it comes upon with different rollers arranged in-line following such forming direction. Each roller is different to the subsequent in that their thickness or edge angle is successively increased along the forming direction.

This plurality of rollers is adapted to sequentially pass through the planar laminate, in particular through the foot portion of the planar laminate, so that both foot gradually bend away from the other up to form the T-profile composite part.

In other words, as the in-line rollers widens (i.e. increase in thickness), the planar laminate is obliged to open gradually (i.e. each feet gradually bends further away from the other).

Similarly, by progressively increasing their edge angles, on each side of that edge angle a different feet is rolled by, so that it provokes they bend away from the other.

It is to be noted that the edge angle of each in-line roller defines the bending radius -by the folding line- of each feet. Therefore, as the edge angle of the roller increase, the bending radius of each feet in the planar laminate reduces. It is preferred that both foot are bended symmetrically.

To aid this progressive forming, heating means are envisaged in the composite forming station to as to soften the planar laminate thus facilitating the bending process.

Consequently, a smooth bending process of the planar laminate is achieved by the present forming station. Advantageously, undesired relative movement between plies is highly reduced as well as wrinkle effect avoided.

Further, as the web portion of the planar laminate is arranged between the guiding means of the composite forming station, the web edge is not subjected to forming process as prior art does. Accordingly, the undesired 'book effect' on the web edge is eliminated, enabling a net shape on this web edge.

The present composite forming station also integrates in one place all necessary means to form in a single step a T-profile composite part, such as a stringer, from a laminate thereof.

Thus, the composite forming station advantageously allows reducing the lead time of the forming task before curing, increasing the production rate of 'T-profile' composite parts by means of a fast and cost-saving solution.

Potential misalignments of correctly positioning both 'L-profile' composite parts are avoided herein as both halves of the 'T-profile' are laminated together. That is, laminate positioning and shape accuracy is highly increased as the forming operation doesn't affect the web quality.

The final 'T-profile' composite part still resting on the guiding means is then moved to an oven or autoclave for the final curing step in order to be subject to high pressure and temperature. That is, the composite forming station further comprises necessary means, i.e. the guiding means, to act as the curing tool.

In other words, by the present invention it is no longer needed separate stations *-and associated tooling-* for forming-up the planar laminate, prepare it for curing, etc. As mentioned, the number of sub-steps and handling movements between both stations is eliminated, as both process (forming-up the planar laminate and prepare it for subsequent curing in the curing tool) are carried out in a single one.

Furthermore, as the final shape of the 'T-profile' is achieved directly on the guiding means used for later curing thereof, the risks associated to misalignment between the conventional forming tools and the curing tool as well as the second forming operation to get the final shape on the curing tool is therefore eliminated.

The guiding means are two L-shape caul plates arranged at a pre-determined distance for placing the composite part therebetween.

'L-shapes' of the caul plates better adapts to the final form of the final 'L-profile' halves of the 'T-profile' composite part. In addition, the pre-determined distance between both 'L-shape' caul plates corresponds to the web portion thickness of the planar laminate.

Particularly, both L-shape caul plates are configured to apply a tangential pressure to the planar laminate to keep it in correct position.

In a particular embodiment, the heating means comprises:
- at the foremost of the forming direction, an infrared heater for pre-heating the planar laminate; and/or
- a resistance air heater along the forming direction for continuing heating the planar laminate as it gradually forms; and/or
- an air blow heater for homogenize warmed air.

By this embodiment, the planar laminate is correctly pre-heated to start being formed (i.e. bended). As the composite part passes by the subsequent in-line rollers, it is gradually subject to a higher bending so that a surplus heating shall be advantageous to facilitate the process without affecting the 'T-profile' quality.

In a particular embodiment, the foremost roller of the plurality of in-line rollers, with the minimum edge angle has a substantially acute edge configured to separate a portion of the planar laminate corresponding to the feet of the T-profile composite part once formed.

The foremost roller has a substantially acute edge so that it entrains in the planar laminate forcing both foot to start bending away from the other. In particular, the substantially acute edge of the foremost roller is configured to separate the two release films in turn separating the respective stacked foot of the planar laminate.

In a particular embodiment, the last roller of the plurality of in-line rollers with the maximum edge angle has a substantially widened flat edge configured to set the portion of the planar laminate corresponding to the feet of the T-profile composite part perpendicular to the web.

The composite forming station further comprises a vacuum bag arranged between the guiding means and adapted to receive the planar laminate.

This allows performing the forming operation directly on the curing tools as the vacuum bag is firstly placed on the curing tool before the planar laminate is arranged.

In particular, the use of the vacuum bag permits to place the composite forming station in an oven since the vacuum bag already exerts the necessary pressure over the composite part.

In a particular embodiment, the composite forming station further comprises cooling means for blowing cooling air toward the formed composite part together with the last roller of the in-line rollers or during a subsequent step.

In a second inventive aspect, the invention provides a method according to claim 6 for forming a T-profile composite part from a planar laminate thereof, the method comprising the steps of:
- laying up a planar laminate composed by a set of stacked plies, such planar laminate comprising a folding line dividing the planar laminate into:
   o a web portion for being part of the web of the T-profile composite part, and
   o a foot portion comprising respective stacked foot of the T-profile composite part; wherein such foot are delimited by the folding line and a free end;
   in such a way that the respective stacked foot are separated from each other by two release films;
- providing a composite forming station for forming a T-profile composite part from the planar laminate according to any of the embodiments of the first inventive aspect;
- arranging the web portion of the planar laminate between the guiding means of the composite forming station;
- moving the planar laminate relative to the plurality of in-line rollers in the forming direction in such a way that rollers subsequently passes between the release films separating the stacked foot of the planar laminate;
so that the composite forming station gradually opens and forms the planar laminate into the T-profile composite part as it moves through subsequent in-line rollers.

Throughout this entire document, a 'ply' should be understood as a single continuous area of composite material to be laid on a form, where two plies in the same layer do not normally overlap. The laying-up step may be performed by well-known Automated Tape Laying (ATL) or Automated Fiber Placement (AFP) technologies.

It can be noted that, once the planar laminate is laid-up, the stack of plies may be trimmed to the required shape, eliminating material excess.

Throughout this entire document, a 'release film' should be understood as a thin plastic film either porous (referred to as perforated) or non-porous which prevents foreign materials from becoming integrated into the composite part.

The advantages discussed throughout the first inventive aspect can be similarly applied to the method of the second inventive aspect.

In a particular embodiment, the method further comprises the step of:
- placing a rowing between the T-profile composite part foot for filling the gap where both foot diverts from each other.

A rowing is a composite filler adapted to fill the space between both feet (i.e. the diverting point of both halves of the 'T-profile' composite part). A 'roving' is normally understood as a bundle of fibres which may be unidirectional and unspun or otherwise shaped into patterns to provide structural continuity and void avoidance.

The rowing is manufactured independently, being afterward placed on such diverting point of the formed-up 'T-profile' composite part. The manufacturing of a rowing comprises the following steps:
- laying up a set of plies in a stacked manner;
- rolling-up the stacked plies up to form a cylinder;
- placing the rolled cylinder in a 'V-shaped' forming tool;
- positioning a vacuum bag on the 'V-shaped' forming tool comprising the rolled cylinder; and
- optionally, curing the rolled cylinder in a curing tool.

Then, the cured rowing is placed between the T-profile composite part foot and bonded thereto. Alternatively, both uncured rowing and T-profile composite part can be co-cured together.

Preferably, before placing the rowing between the T-profile composite part foot, the release films have been removed previously.

In a particular embodiment, the two release films separating the stacked foot of the planar laminate extends from the folding line all over the foot portion.

Pre-preg plies are inherently sticky, so the bending away movement of both foot is prevented. By using release films, this separation is highly facilitated as the facing surfaces of the foot (inherent sticky) does not touch each other.

Preferably, the two release films projects 10 mm. out from the edge of the stacked foot of the planar laminate. This allows an easy handling to initially separate the portion of the planar laminate corresponding to the feet of the T-profile composite.

In a particular embodiment, the planar laminate is laid-up with a greater number of stacked plies within the web portion than the foot portion.

This extra stacked plies forms the *so-called* 'blade', that is, an additional element reinforcing the web of the 'T-profile' composite part arranged between respective webs of the 'L-profile' halves.

Unlike conventional techniques where an additional step for correctly placing the blade was necessary, the blade is, by the present invention, integrally laid-up with both 'L-profile' halves.

Therefore, the guiding means are distanced according to the web portion thickness of the planar laminate, including both halves plus the blade.

In a particular embodiment, the T-profile composite part is an aeronautical stringer.

Stringers are very common in the aeronautical industry since a typical aircraft requires large amounts of these reinforcing elements throughout the fuselage and wing, for instance.

Therefore, stringers are manufactured in mass production with a high level of automation, especially on assembly lines.

Thus, thanks to the simplicity and readily use of the present invention, the above advantages are stressed where the 'T-profile' composite part is an aeronautical stringer.

In short, the most remarkable feature of the T-profile composite part formed by the method according to the invention is a net shape on the web edge as the undesired 'book effect' thereon is eliminated. In addition, wrinkling effect is no longer present in a T-profile composite part formed by the present method.

### DESCRIPTION OF THE DRAWINGS

These and other characteristics and advantages of the invention will become clearly understood in view of the detailed description of the invention which becomes apparent from a preferred embodiment of the invention with reference to the drawings.
- Figure 1: This figure shows planar laminate composed by a set of stacked plies, such planar laminate comprising a folding line dividing the planar laminate into a web portion and a foot portion according to the present invention.
- Figure 2: This figure shows a schematic representation of an embodiment of the composite forming station according to the present invention.
- Figures 3a-3c: These figures show three cross-sectional views of the composite forming station: before forming, during forming and after formed.

### DETAILED DESCRIPTION OF THE INVENTION

The skilled person in the art recognizes that aspects of the present invention described hereinafter may be embodied either as a composite forming station (10) or a method for forming a T-profile composite part (1) from a planar laminate (2) thereof.

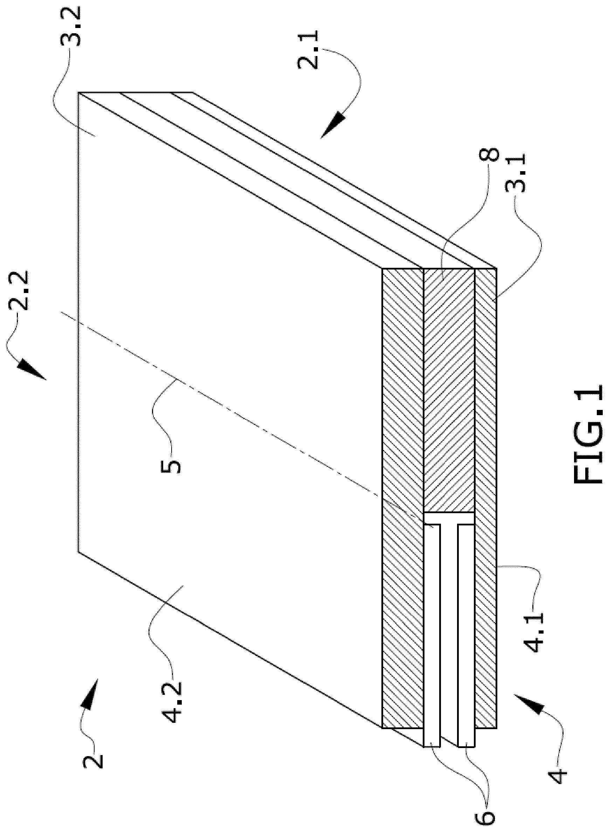

Figure 1 depicts a planar laminate (2) composed by a set of stacked plies to be used by the composite forming station (10) of the present invention.

The planar laminate (2) composed by stacked plies in turn comprises a folding line (5) dividing such planar laminate into:
o a web portion (3) for being part of the web of a T-profile composite part (1), and
o a foot portion (4) comprising respective stacked foot (4.1, 4.2) of the T-profile composite part.

In particular, such planar laminate (2) comprises the two equal halves (2.1, 2.2) forming part of the 'T-profile' once formed, that is, the two 'L-profile' halves. Each half (2.1, 2.2) is preferably laid up with the same number of plies in order to balance load transferring.

Similarly, each half (2.1, 2.2) of the planar laminate (2) comprises a web portion (3.1, 3.2) and a feet portion (4.1, 4.2). It can be seen that between respective feet portions (4.1, 4.2), the stacked plies are separated by two release films (6).

At the same height than both release films, there is an additional stack of plies (8) within the web portion (3) which corresponds to the 'blade' of the web once the 'T-profile' composite part (1) is formed. In other words, this additional stack of plies (8) in the web portion (3) of the planar laminate (2) are introduced at the same laying sequence than the release films (6).

During the laying-up process, a first half (2.1) is laid-up up to comprise its web (3.1) and feet (4.1) portions. Then, additional plies (8) are laid up over its web portion (3.1) in order to form the 'blade'. And, at the same time, two stacked release films (6) are place within the feet portion (4.1). As the respective foot are delimited by their respective folding lines and free ends, the release films (6) cover the same area (4.1). Optionally, the release films (6) may extend beyond the free ends of the feet portions (3.1, 3.2), particularly 10 mm away.

After that, the other half (2.2) of the planar laminate is laid-up over the existing stack of plies as well as over upper release film.

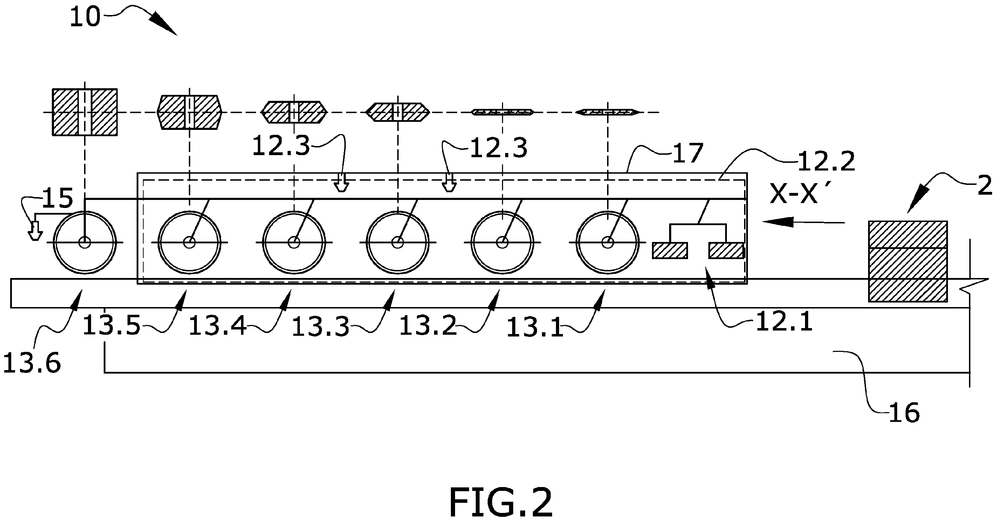

Figure 2 depicts a schematic representation of a composite forming station (10) according to the present invention.

The composite forming station (10) comprises:
- guiding means (11) adapted to align the composite part with a forming direction (x-x');
- heating means (12.1, 12.2, 12.3); and
- a plurality of in-line rollers (13.1-13.6) arranged so as to follow a forming direction (x-x'), wherein each roller (13.1-13.6) comprises a thickness and an edge angle; such that the thickness and/or the edge angle of the rollers is successively increased along the forming direction (x-x').

As a result, the composite forming station (10) gradually opens and forms the planar laminate (2) into the T-profile composite part (1) as it passes for the subsequent in-line rollers (13.1-13.6).

The planar laminate (2) is as the one shown in figure 1 (with or without 'blade'). In particular, the web portion (3) of the planar laminate (2) is arranged between the guiding means (11) of the composite forming station (10) so that the foot portion (4) is left free.

In turn, the foot portion (4) of the planar laminate (2) is left free so that the plurality of rollers (13.1-13.6) can sequentially pass through it. As the planar laminate (2) advances in such forming direction (x-x') guided by the guiding means (11), each feet (4.1, 4.2) gradually bends away from the other up to form the T-profile composite part (1).

As it can be seen from figure 2, each roller (13.1-13.6) is different to the subsequent in that their thickness or edge angle is successively increased along the forming direction (x-x').

The foremost roller (13.1) (in the forming direction) has a substantially acute edge configured to divide the planar laminate (2) by the foot portion (4). That is, the acute edge (a) permits the foremost roller (13.1) to pass through the release films (6).

Apart from the acute angle (a), the foremost roller (13.1) has the minimum thickness, being substantially flat, so as to ease penetration between release films (6).

For exemplary purposes, 6 in-line rollers (13.1-13.6) which increases in both edge angle and thickness are represented in figure 2. Nevertheless, other number of rollers may be envisaged as long as the planar laminate (2) gradually opens and forms into the T-profile composite part (1) as it passes for the desired number of subsequent in-line rollers (13.1-13.6).

Moreover, although only a 'T-profile' composite part (1) is described herein (i.e. where the web and foot are substantially perpendicular), other profiles can be achieved by controlling the thickness and edge angle of the last roller (13.6).

For instance, in figure 2, the last roller (13.6) of the plurality of in-line rollers (13.1-*13.6) -with the maximum edge angle-* has a substantially widened flat edge (90°) configured to set the portions (4.1, 4.2) of the planar laminate (2) corresponding to the foot of the T-profile composite part (1) perpendicular to the web (3).

It can be seen that, from the foremost roller (13.1) to the last one (13.6), the plurality of in-line rollers (13.1-13.6) successively increase in thickness and edge angle. For instance, as the edge angle (acute angle) of the foremost roller is (a), the edge angle of next roller should be increased up to (b), which is higher than (a): 'b > a'. This is repeated throughout all rollers as depicted.

Similarly, the thickness widens from one roller to the next one. However, it can be appreciated that the diameter is maintained unaltered throughout them.

Above each roller (13.1-13.6) location within the composite forming section, it is represented a section view thereof to appreciate the mentioned increasing in thickness and edge angle.

Furthermore, the planar laminate (2) undergoes at the foremost of the composite forming station (10) a pre-heating by an infrared heater (12.1). The composite forming station (10) comprises additional heating means such as a resistance air heater (12.2) along the forming direction (x-x') for continuing heating the planar laminate (2) as it gradually forms; and an air blow heater (12.3) to homogenize warmed air.

Preferably, the composite forming tool (10) is housed by an external housing (17) to host the heating means (12.1, 12.2, 12.3). That is, the housing (17) comprises the resistance air heaters (12.2) forming a heating box.

Also, adjacent to the last roller (13.6) of the in-line rollers, the composite forming station (10) further comprises cooling means (15) for blowing cooling air toward the formed laminate, either directly on the last roller (13.6) or during a subsequent step.

The cooling means (15) are configured to cool down the formed 'T-profile' composite part (1) for maintaining such profile during subsequent handling. Accordingly, the last roller (13.6) is out range of any of the heating means (12.1, 12.2, 12.3) for energy saving.

Preferably, the last roller (13.6) together with the cooling means (15) are out of the housing (17).

The entire composite forming station (10) is placed over a beam (16).

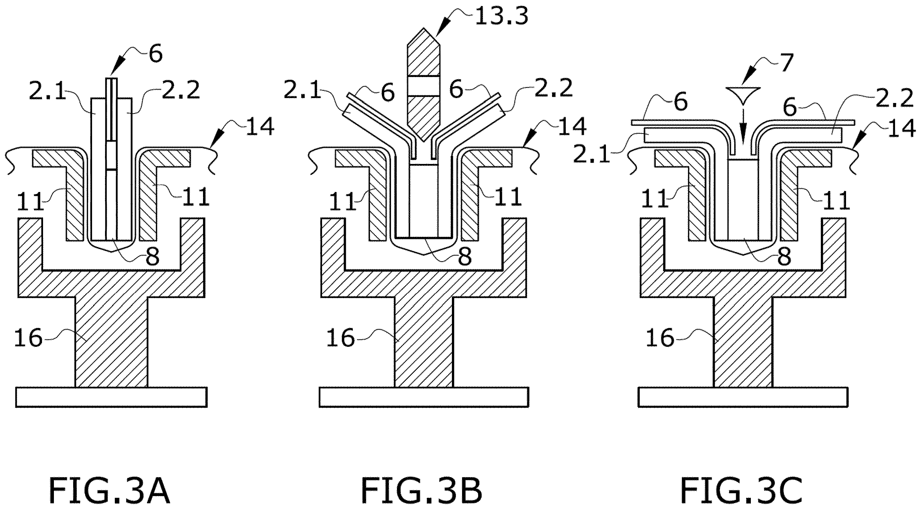

Figures 3a-3c depicts three different cross-sectional views of the composite forming station (10) corresponding to three different situations: before the planar laminate (2) is formed, during forming and after being formed.

Particularly, figure 3a depicts a schematic representation about how the planar laminate (2) is arranged between the guiding means (11) to be aligned with the forming direction (x-x') in the composite forming tool (10).

It can be seen that the guiding means are two L-shape caul plates (11) distanced from each other a pre-determined distance corresponding to the web portion (3) thickness of the planar laminate (2) (with or without 'blade' (8)).

The 'L-shaped' caul plates (11) further constraint the final form of each final 'L-profile' halves (2.1, 2.2) of the 'T-profile' composite part. As it was already mentioned, after being formed, the 'T-profile' composite part resting on the L-shape caul plates can be moved into an oven or autoclave for the final curing step, so that the L-shape caul plates (11) further act as a curing tool.

Additionally, a vacuum bag (14) is arranged between the L-shape caul plates (11) so that it receives the planar laminate (2) as shown in figure 3a. It is to be noted that, although only the vacuum bag (14) is represented and discussed herein, the person skilled in the art recognizes that other vacuum equipment such as a vacuum pump, vacuum gauges, valves, clamps, hoses, connectors, sealing tape, breather, etc. may need to be installed in the composite forming tool (10).

On the other hand, figure 3b depicts the same planar laminate discussed in figure 3a, but having advanced in the forming direction (x-x') of the composite forming tool (10). In particular, the planar laminate already passed the foremost roller (13.1) whose acute edge entrained between the two release films (6) forcing both foot portions (4.1, 4.2) to start bending away from the other.

The situation of figure 3b may correspond with the third roller (13.3) of the plurality of rollers (13.1-13.6) shown in figure 2.

On each side of the edge angle of this roller (13.3), a different foot (4.1, 4.2) of the composite part is rolled by so that it provokes them (4.1, 4.2) to bend away from the other.

Particularly, the edge angle of each in-line roller (13.1-13.6) defines the instant bending radius -by the folding line- of each feet (4.1, 4.2) with respect to the web portion (3.1, 3.2). More particularly, while the edge angle forces both foot (4.1, 4.2) to bend away from the other, the L-shape caul plate (11) provides a support to constraint their bending motion. Preferably, both foot (4.1, 4.2) are bended symmetrically.

Figure 3c corresponds with the following situation of figure 3b where the composite part (1) has passed by all the rollers of the plurality of rollers (13.1-13.6). That is, where the 'T-profile' composite part (1) has been formed by the composite forming station (10) of the present invention.

In particular it can be seen that both halves (2.1, 2.2) of the 'T-profile' rests on respective L-shape caul plates (11).

On top of the figure 3c, it can be seen a rowing (7) in cross-section, which is intended to be placed between the T-profile composite part foot (4.1, 4.2) for filling the gap where both foot diverts from each other. As mentioned, to do so, the release films (6) need to be removed previously.

Furthermore, it can be appreciated that the vacuum bag (14) is dimensioned so as to cover at least the web edge of the 'T-profile' composite part (1) plus the entire outer surfaces of both L-shape caul plates (11).

After formed, the T-profile composite part (1) resting on the L-shape caul plates (11) *-adapted to act as a curing tool-* may be moved on an oven or autoclave, as it may apply.

Then, the cured 'T-profile' composite part (1) may be co-bonded with a base laminate for final arrangement. In aeronautics, the formed and cured stringer is arranged skin or panel by co-bonding the foot (and the rowing) leaving the web projecting perpendicularly.

Alternatively, the formed 'T-profile' composite part (e.g. the stringer) may be positioned on the base laminate in the final arrangement, and then both parts cocored together.

## Claims

1. A composite forming station (10) for forming a T-profile composite part (1) from a planar laminate (2) thereof along a forming direction (x-x'), the planar laminate (2) composed by a set of stacked plies, such planar laminate (2) comprising a folding line (5) dividing the planar laminate (2) into:
o a web portion (3) for being part of the web of the T-profile composite part (1), and
o a foot portion (4) comprising respective stacked feet (4.1, 4.2) of the T-profile composite part (1); wherein such feet (4) are delimited by the folding line (5) and a free end;
in such a way that the respective stacked feet (4.1, 4.2) are separated from each other by two release films (6);
the composite forming station (10) comprising:
- guiding means (11) adapted to align the composite part (1) with the forming direction (x-x');
- heating means (12.1, 12.2, 12.3); and
- a plurality of in-line rollers (13.1-13.6) arranged so as to follow the forming direction (x-x'), wherein each roller comprises a thickness and an edge angle; such that the thickness and the edge angle of the rollers are successively increased along the forming direction (x-x');
in such a way that the composite forming station (10) gradually opens and forms the planar laminate (2) into the T-profile composite part (1) as it passes for subsequent in-line rollers (13.1-13.6);
wherein
the guiding means are two L-shape caul plates (11) arranged at a pre-determined distance for placing the composite part therebetween; and
the composite forming station (10) further comprises a vacuum bag (14) arranged between the guiding means (11) and adapted to receive the planar laminate (2).

2. The composite forming station (10) according to claim 1, wherein the heating means comprises:
- at the foremost of the forming direction (x-x'), an infrared heater (12.1) for pre-heating the planar laminate (2); and/or
- a resistance air heater (12.2) along the forming direction (x-x') for continuing heating the planar laminate (2) as it gradually forms; and/or
- an air blow heater (12.3) for homogenize warmed air.

3. The composite forming station (10) according to any of claims 1 to 2, wherein the foremost roller (13.1), of the plurality of in-line rollers (13.1-13.6), with the minimum edge angle has a substantially acute edge configured to separate a portion (4) of the planar laminate (2) corresponding to the feet of the T-profile composite part (1) once formed.

4. The composite forming station (10) according to any of claims 1 to 3, wherein the last roller (13.1-13.6) of the plurality of in-line rollers (13.1-13.6) with the maximum edge angle has a substantially widened flat edge configured to set the portion (4) of the planar laminate (2) corresponding to the feet of the T-profile composite part (1) perpendicular to the web portion (3).

5. The composite forming station (10) according to any of claims 1 to 4, wherein the composite forming station (10) further comprises cooling means (15) for blowing cooling air toward the formed composite part (1) together with the last roller (13.6) of the in-line rollers (13.1-13.6) or during a subsequent step.

6. Method for forming a T-profile composite part (1) from a planar laminate (2) thereof, the method comprising the steps of:
- laying up the planar laminate (2) composed by a set of stacked plies, such planar laminate (2) comprising a folding line (5) dividing the planar laminate (2) into:
o a web portion (3) for being part of the web of the T-profile composite part (1), and
o a foot portion (4) comprising respective stacked feet (4.1, 4.2) of the T-profile composite part (1); wherein such feet (4) are delimited by the folding line (5) and a free end;
in such a way that the respective stacked feet (4.1, 4.2) are separated from each other by two release films (6);
- providing a composite forming station (10) for forming a T-profile composite part from the planar laminate according to any of claims 1 to 5;
- arranging the web portion (3) of the planar laminate (2) between the guiding means (11) of the composite forming station (10);
- moving the planar laminate (2) relative to the plurality of in-line rollers (13.1-13.6) in the forming direction (x-x') in such a way that the rollers subsequently pass between the release films (6) separating the stacked feet (4.1, 4.2) of the planar laminate (2) from each other;
so that the composite forming station (10) gradually opens and forms the planar laminate (2) into the T-profile composite (1) part as it moves through subsequent in-line rollers (13.1-13.6).

7. Method for forming a T-profile composite part (1) according to claim 6, wherein the method further comprises the step of:
- placing a rowing (7) between the T-profile composite part feet (4.1, 4.2) for filling the gap where both feet divert from each other.

8. Method for forming a T-profile composite part (1) according to any of claims 6 or 7, wherein the two release films (6) separating the stacked feet (4.1, 4.2) of the planar laminate (2) extend from the folding line (5) all over the foot portion (4).

9. Method for forming a T-profile composite part (1) according to any of claims 6 to 8, wherein the planar laminate (2) is laid-up with a greater number of stacked plies (8) within the web portion (3) than the foot portion (4).

10. Method for forming a T-profile composite part (1) according to any of claims 6 to 9, wherein the T-profile composite part (1) is an aeronautical stringer.

## Patentansprüche

1. Verbundmaterial-Formstation (10) zum Bilden eines T-Profil-Verbundteils (1) aus einem planaren Laminat (2) davon entlang einer Formrichtung (x-x'), wobei das planare Laminat (2) aus einem Satz von gestapelten Lagen zusammengesetzt ist, wobei das planare Laminat (2) eine Faltlinie (5) umfasst, die das planare Laminat (2) teilt in:
o einen Stegteil (3) dafür, Teil des Stegs des T-Profil-Verbundteils (1) zu sein, und
o einen Fußteil (4) umfassend entsprechende gestapelte Füße (4.1, 4.2) des T-Profil-Verbundteils (1); wobei die Füße (4) durch die Faltlinie (5) und ein freies Ende begrenzt sind;
auf eine solche Weise, dass die entsprechenden gestapelten Füße (4.1, 4.2) durch zwei Trennfolien (6) voneinander getrennt sind;
wobei die Verbundmaterial-Formstation (10) umfasst:
- Führungsmittel (11), dafür ausgelegt, das Verbundteil (1) mit der Formrichtung (x-x') auszurichten;
- Heizmittel (12.1, 12.2, 12.3); und
- eine Vielzahl von In-line-Rollen (13.1-13.6), so angeordnet, dass sie der Formrichtung (x-x') folgen, wobei jede Rolle eine Dicke und einen Kantenwinkel aufweist; so dass die Dicke und der Kantenwinkel der Rollen entlang der Formrichtung (x-x') fortlaufend zunehmen;
auf eine solche Weise, dass die Verbundmaterial-Formstation (10) das planare Laminat (2) schrittweise öffnet zu dem T-Profil-Verbundteil (1) formt, während es aufeinanderfolgende In-line-Rollen (13.1-13.6) passiert;
wobei
die Führungsmittel zwei L-förmige Druckplatten (11) sind, die in einem vorgegebenen Abstand angeordnet sind, um das Verbundteil dazwischen zu platzieren; und die Verbundmaterial-Formstation (10) ferner einen Vakuumbeutel (14) umfasst, der zwischen den Führungsmitteln (11) angeordnet ist und zum Aufnehmen des planaren Laminats (2) ausgelegt ist.

2. Verbundmaterial-Formstation (10) nach Anspruch 1, wobei das Heizmittel umfasst:
- zuvorderst der Formrichtung (x-x') einen Infrarotheizer (12.1) zum Vorwärmen des planaren Laminats (2); und/oder
- einen Widerstands-Luftheizer (12.2) entlang der Formrichtung (x-x') zum Fortsetzen des Erhitzens des planaren Laminats (2), während es schrittweise geformt wird; und/oder
- einen Luftgebläseheizer (12.3) zur Homogenisierung von erwärmter Luft.

3. Verbundmaterial-Formstation (10) nach einem der Ansprüche 1 bis 2, wobei die vorderste Rolle (13.1) der Vielzahl von In-line-Rollen (13.1-13.6) mit dem kleinsten Kantenwinkel eine im Wesentlichen spitze Kante aufweist, die dafür gestaltet ist, einen Teil (4) des planaren Laminats (2), der den Füßen des T-Profil-Verbundteils (1) nach dem Formen entspricht, zu trennen.

4. Verbundmaterial-Formstation (10) nach einem der Ansprüche 1 bis 3, wobei die letzte Rolle (13.1-13.6) der Vielzahl von In-line-Rollen (13.1-13.6) mit dem größten Kantenwinkel eine im Wesentlichen breite flache Kante aufweist, die dafür gestaltet ist, den Teil (4) des planaren Laminats (2), der den Füßen des T-Profil-Verbundteil (1) entspricht, senkrecht zu dem Stegteil (3) zu setzen.

5. Verbundmaterial-Formstation (10) nach einem der Ansprüche 1 bis 4, wobei die Verbundmaterial-Formstation (10) ferner Kühlmittel (15) umfasst, um bei der letzten Rolle (13.6) der In-line-Rollen (13.1-13.6) oder während eines nachfolgenden Schritts Kühlluft in Richtung zu dem geformten Verbundteil (1) zu blasen.

6. Verfahren zur Herstellung eines T-Profil-Verbundteils (1) aus einem planaren Laminat (2) davon, wobei das Verfahren die Schritte umfasst:
- Auflegen des planaren Laminats (2), das aus einem Satz von gestapelten Lagen besteht, wobei das planare Laminat (2) eine Faltlinie (5) umfasst, die das planare Laminat (2) teilt in:
o einen Stegteil (3) dafür, Teil des Stegs des T-Profil-Verbundteils (1) zu sein, und
o einen Fußteil (4) umfassend entsprechende gestapelte Füße (4.1, 4.2) des T-Profil-Verbundteils (1); wobei die Füße (4) durch die Faltlinie (5) und ein freies Ende begrenzt sind;
auf eine solche Weise, dass die entsprechenden gestapelten Füße (4.1, 4.2) durch zwei Trennfolien (6) voneinander getrennt sind;
- Bereitstellen einer Verbundmaterial-Formstation (10) zum Bilden eines T-Profil-Verbundteils aus dem planaren Laminat nach einem der Ansprüche 1 bis 5;
- Anordnen des Stegteils (3) des planaren Laminats (2) zwischen den Führungsmitteln (11) der Verbundmaterial-Formstation (10);
- Bewegen des planaren Laminats (2) relativ zu der Vielzahl von In-line-Rollen (13.1-13.6) in der Formrichtung (x-x') auf eine solche Weise, dass die Rollen nacheinander zwischen den Trennfolien (6) passiern, die die gestapelten Füße (4.1, 4.2) des planaren Laminats (2) voneinander trennen;
so dass dass die Verbundmaterial-Formstation (10) das planare Laminat (2) schrittweise öffnet und zu dem T-Profil-Verbundteil (1) formt, während es sich durch aufeinanderfolgende In-line-Rollen (13.1-13.6) bewegt.

7. Verfahren zur Herstellung eines T-Profil-Verbundteils (1) nach Anspruch 6, wobei das Verfahren ferner den Schritt umfasst:
- Anordnen eines Rowings (7) zwischen den Füßen (4.1, 4.2) des T-Profil-Verbundteils zum Füllen des Spalts, an dem beide Füße auseinanderlaufen.

8. Verfahren zur Herstellung eines T-Profil-Verbundteils (1) nach einem der Ansprüche 6 oder 7, wobei sich die beiden Trennfolien (6), die die gestapelten Füße (4.1, 4.2) des planaren Laminats (2) trennen, von der Faltlinie (5) über den gesamten Fußteil (4) erstrecken.

9. Verfahren zur Herstellung eines T-Profil-Verbundteils (1) nach einem der Ansprüche 6 bis 8, wobei das planare Laminat (2) mit einer größeren Anzahl von gestapelten Lagen (8) innerhalb des Stegteils (3) als innerhalb des Fußteil (4) gelegt wird.

10. Verfahren zur Herstellung eines T-Profil-Verbundteils (1) nach einem der Ansprüche 6 bis 9, wobei das T-Profil-Verbundteil (1) ein Luftfahrzeugstringer ist.

## Revendications

1. Station de formage de composite (10) permettant de former une pièce composite à profil en T (1) à partir d'un stratifié plan (2) de celle-ci le long d'une direction de formage (x-x'), le stratifié plan (2) étant composé d'un ensemble de plis empilés, un tel stratifié plan (2) comprenant une ligne de pliage (5) divisant le stratifié plan (2) en :
o une partie d'âme (3) destinée à faire partie de l'âme de la pièce composite à profil en T (1), et
o une partie de pieds (4) comprenant des pieds empilés respectifs (4.1, 4.2) de la pièce composite à profil en T (1) ; dans laquelle de tels pieds (4) sont délimités par la ligne de pliage (5) et une extrémité libre ;
de telle sorte que les pieds empilés respectifs (4.1, 4.2) soient séparés l'un de l'autre par deux films de séparation (6) ;
la station de formage de composite (10) comprenant :
- des moyens de guidage (11) conçus pour aligner la pièce composite (1) sur la direction de formage (x-x') ;
- des moyens de chauffage (12.1, 12.2, 12.3) ; et
- une pluralité de rouleaux en ligne (13.1 à 13.6) agencés de manière à suivre la direction de formage (x-x'), dans laquelle chaque rouleau comprend une épaisseur et un angle de chant ; de telle sorte que l'épaisseur et l'angle de chant des rouleaux soient successivement croissants le long de la direction de formage (x-x') ;
de telle sorte que la station de formage de composite (10) s'ouvre progressivement et forme le stratifié plan (2) en une pièce composite à profil en T (1) au fur et à mesure qu'il passe par les rouleaux en ligne suivants (13.1 à 13.6) ;
dans laquelle
les moyens de guidage sont deux plaques de calandre en forme de L (11) agencées à une distance prédéfinie pour placer la pièce composite entre elles ; et la station de formage de composite (10) comprend en outre une poche à vide (14) agencée entre les moyens de guidage (11) et conçue pour recevoir le stratifié plan (2).

2. Station de formage de composite (10) selon la revendication 1, dans laquelle les moyens de chauffage comprennent :
- au niveau de la partie la plus en avant de la direction de formage (x-x'), un dispositif de chauffage à infrarouge (12.1) pour préchauffer le stratifié plan (2) ; et/ou
- un échangeur thermique à résistance (12.2) le long de la direction de formage (x-x') pour continuer à chauffer le stratifié plan (2) au fur et à mesure qu'il se forme ; et/ou
- un radiateur soufflant de l'air (12.3) pour homogénéiser l'air réchauffé.

3. Station de formage de composite (10) selon l'une quelconque des revendications 1 à 2, dans laquelle le rouleau le plus en avant (13.1), de la pluralité de rouleaux en ligne (13.1 à 13.6), avec l'angle de chant minimal, a un chant sensiblement aigu configuré pour séparer une partie (4) du stratifié plan (2) correspondant aux pieds de la pièce composite à profil en T (1) une fois formée.

4. Station de formage de composite (10) selon l'une quelconque des revendications 1 à 3, dans lequel le dernier rouleau (13.1 à 13.6) de la pluralité de rouleaux en ligne (13.1 à 13.6) avec l'angle de chant maximal a un chant plat sensiblement élargi configuré pour placer la partie (4) du stratifié plan (2) correspondant aux pieds de la pièce composite à profil en T (1) perpendiculairement à la partie d'âme (3).

5. Station de formage de composite (10) selon l'une quelconque des revendications 1 à 4, dans laquelle la station de formage de composite (10) comprend en outre des moyens de refroidissement (15) pour souffler de l'air de refroidissement vers la pièce composite (1) formée conjointement avec le dernier rouleau (13.6) des rouleaux en ligne (13.1 à 13.6) ou au cours d'une étape ultérieure.

6. Procédé de formage d'une pièce composite à profil en T (1) à partir d'un stratifié plan (2) de celle-ci, le procédé comprenant les étapes suivantes :
- la mise en place du stratifié plan (2) composé d'un ensemble de plis empilés, un tel stratifié : plan (2) comprenant une ligne de pliage (5) divisant le stratifié plan (2) en :
o une partie d'âme (3) destinée à faire partie de l'âme de la pièce composite à profil en T (1), et
o une partie de pieds (4) comprenant des pieds empilés respectifs (4.1, 4.2) de la pièce composite à profil en T (1) ; dans laquelle de tels pieds (4) sont délimités par la ligne de pliage (5) et une extrémité libre ;
de telle sorte que les pieds empilés respectifs (4.1, 4.2) soient séparés l'un de l'autre par deux films de séparation (6) ;
- la fourniture d'une station de formage de composite (10) pour former une pièce composite à profil en T à partir du stratifié plan selon l'une quelconque des revendications 1 à 5 ;
- l'agencement de la partie d'âme (3) du stratifié plan (2) entre les moyens de guidage (11) de la station de formage de composite (10) ;
- le déplacement du stratifié plan (2) par rapport à la pluralité de rouleaux en ligne (13.1 à 13.6) dans la direction de formage (x-x') de telle sorte que les rouleaux passent ensuite entre les films de séparation (6) séparant les pieds empilés (4.1, 4.2) du stratifié plan (2) l'un de l'autre ;
de sorte que la station de formage composite (10) s'ouvre progressivement et forme le stratifié plan (2) en pièce composite à profil en T (1) au fur et à mesure qu'il se déplace à travers les rouleaux en ligne suivants (13.1 à 13.6).

7. Procédé de formage d'une pièce composite à profil en T (1) selon la revendication 6, dans lequel le procédé comprend en outre l'étape de :
- le placement d'une cale (7) entre les pieds de la pièce composite à profil en T (4.1, 4.2) pour combler l'espace où les deux pieds s'écartent l'un de l'autre.

8. Procédé de formage d'une pièce composite à profil en T (1) selon l'une quelconque des revendications 6 ou 7, dans lequel les deux films de séparation (6) séparant les pieds empilés (4.1, 4.2) du stratifié plan (2) s'étendent à partir de la ligne de pliage (5) sur l'ensemble de la partie de pieds (4).

9. Procédé de formage d'une pièce composite à profil en T (1) selon l'une quelconque des revendications 6 à 8, dans lequel le stratifié plan (2) est posé avec un plus grand nombre de plis empilés (8) dans la partie d'âme (3) que dans la partie de pieds (4).

10. Procédé de formage d'une pièce composite à profil en T (1) selon l'une quelconque des revendications 6 à 9, dans lequel la pièce composite à profil en T (1) est une lisse aéronautique.
